# FASCICULE DE BREVET EUROPEEN

(11) **EP 3 010 787 B1**
(45) Date de publication et mention de la délivrance du brevet: **24.05.2017**
(21) Numéro de dépôt: 14733259.7
(22) Date de dépôt: 04.06.2014
(51) Int. Cl.: B62D 15/02

(54) **PROCÉDÉ DE MESURE ET DE COMMANDE POUR UN SYSTÈME DE DIRECTION DE VÉHICULE**
MESS- UND STEUERUNGSVERFAHREN FÜR EIN FAHRZEUGLENKUNGSSYSTEM
MEASURING AND CONTROL METHOD FOR A VEHICLE STEERING SYSTEM

(30) Priorité: 18.06.2013 FR 1355726
(43) Date de publication de la demande: 27.04.2016
(73) Titulaire: Renault S.A.S., 92100 Boulogne-Billancourt (FR)
(72) Inventeur: PUGSLEY, Gareth, F-78390 Bois D'arcy (FR); UTTER, Jérôme, F-78280 Guyancourt (FR); FACCHIN, Sylvain, F-92600 Asnieres Sur Seine (FR); CALIXTE, Sandrine, F-78330 Fontenay Le Fleury (FR)
(86) Numéro de dépôt international: PCT/FR2014/051332
(87) Numéro de publication internationale: WO 2014/202861

(56) Documents cités:
- EP-A1- 1 958 850
- DE-A1- 10 211 017
- DE-A1- 19 805 383

## Description

### Domaine technique

La présente invention se rapporte au domaine des directions de véhicule automobile pilotée par un actionneur. Elle se rapporte plus précisément à un procédé de détermination d'une position de l'actionneur, à un procédé de commande utilisant cette position et un système de direction mettant en oeuvre le procédé de commande.

### Etat de la technique

Dans le cas de véhicules comportant quatre roues directrices, les roues avant peuvent être pilotées directement par le conducteur, tandis que les roues arrière sont orientées par des actionneurs, par exemple par des actionneurs électriques. On trouve par exemple fréquemment un actionneur unique qui agit sur les deux roues arrière.

Le document EP1 958 850 A1, qui est considéré comme l'état de la technique le plus proche de l'objet de la revendication indépendante 1, montre un véhicule comportant quatre roues directrices. Les roues arrière sont actionnées par des vérins électriques comportant un moteur, un réducteur et une vis entraînée en rotation par le moteur. Le vérin comporte en regard de la vis un capteur de position qui délivre un signal de position de la vis, et donc de l'orientation de la roue correspondante. Le capteur est basé sur un phénomène magnétique.

Un tel capteur a l'avantage de donner une indication absolue de la position de l'actionneur. Cependant, pour obtenir une information très précise, le capteur doit être de taille importante. Dans le même temps, les vérins électriques disposent d'un capteur de position utilisé pour la régulation de la position du moteur. Ce capteur est précis, mais il donne une information relative, c'est-à-dire que l'information indique le décalage intervenu dans la position du moteur à partir de la position de l'actionneur à un instant de mise en route ou d'initialisation.

L'invention vise à fournir un procédé de détermination de la position d'un actionneur qui soit fiable, précise. Elle vise aussi à ce que le système mettant en oeuvre soit le moins encombrant possible.

### Description de l'invention

Avec ces objectifs en vue, l'invention a pour objet un procédé de détermination d'un signal de position reconstitué de la tige d'un actionneur linéaire d'un système de direction pour un véhicule automobile, le système comprenant un système de détermination de la position de ladite tige qui comporte un premier capteur délivrant une première mesure de la position absolue de la tige, la première mesure n'étant pas linéaire en dehors d'une plage de linéarité prédéterminée, et un deuxième capteur délivrant une deuxième mesure de position relative à la position initiale de la tige à un instant de mise en route du système de détermination, caractérisé en ce qu'on effectue une étape d'initialisation à partir de l'instant de mise en route et on maintient l'étape d'initialisation tant que la première mesure n'est pas dans la plage de linéarité, puis on passe à une phase normale après l'étape d'initialisation, phase pendant laquelle on fournit le signal de position reconstitué de la tige égal à la deuxième mesure réinitialisée à la valeur de la première mesure à la fin de l'étape d'initialisation.

Grâce à l'invention, il est possible d'utiliser un capteur de position absolue qui ne soit pas linéaire sur toute la plage de mesure, tout en garantissant une valeur correcte issue du système de détermination pour le bon fonctionnement du système de direction. Ainsi, on peut réduire la taille du capteur, au point que le signal qu'il délivre soit encore linéaire sur une plage de linéarité centrale, mais dont les mesures sur les zones en dehors de la plage de linéarité ne soient plus linéaires. En effet, le capteur de position absolue est dimensionné pour mesurer l'angle de braquage des roues dans une plage définie, toutefois le braquage desdites roues peut être sensiblement plus important, ce qui affecte les valeurs mesurées.

Le système de détermination est mis en route par une alimentation électrique du capteur. Il peut donc être mis en route soit au démarrage du capteur, soit en cas de coupure brève du réseau électrique, même si le véhicule est en fonctionnement.

Les cas où le système de détermination est initialisé avec une indication de position en dehors de la plage de linéarité sont relativement rares. Ils correspondent à des situations dans lesquelles les roues sont particulièrement braquées. Le véhicule ne reste logiquement pas longtemps dans cette situation et la vitesse du véhicule est faible., par exemple lors d'une manoeuvre de stationnement du véhicule ou lorsque le véhicule est démarré après un stationnement avec les roues particulièrement braquées. Donc, assez rapidement, la position de l'actionneur devrait se rapprocher d'une position neutre de telle sorte que le signal du premier capteur revient dans la plage de linéarité. A ce moment, on connait avec une bonne précision la position absolue de l'actionneur et on peut générer un signal reconstitué à partir du signal du deuxième capteur. Ce signal reconstitué sert alors de base à la détermination de la position de l'actionneur.

Dans le cas où la première mesure est dans la plage de linéarité à la mise en route du système, on connaît immédiatement la bonne position en absolu de l'actionneur. On prend donc cette base pour générer un signal de position reconstitué à laquelle on ajoutera la deuxième mesure, et on passe directement dans la phase normale en utilisant également le signal reconstitué pour la détermination de la position de l'actionneur. Ceci correspond à la plupart des configurations initiales et le système sera directement opérationnel.

L'invention a aussi pour objet un procédé de commande de la position de la tige d'un actionneur linéaire d'un système de direction pour un véhicule automobile, le système comportant un premier capteur délivrant une première mesure de la position absolue de la tige, la première mesure n'étant pas linéaire en dehors d'une plage de linéarité prédéterminée, et un deuxième capteur délivrant une deuxième mesure de position relative à la position initiale de la tige à un instant de mise en route, procédé selon lequel on reçoit une consigne de position pour la tige et on commande la position de la tige en fonction de la comparaison entre la position de la tige et la consigne de position, caractérisé en ce que la position de la tige est déterminée par le signal de position reconstitué par le procédé décrit précédemment.

De manière particulière, pendant l'étape d'initialisation, on utilise la première mesure comme signal de position reconstitué et on commande l'actionneur uniquement dans le sens vers la plage de linéarité. Pendant l'étape d'initialisation, aucun signal n'est reconstitué. On n'autorise alors les mouvements de l'actionneur que dans le sens d'un rapprochement à la position vers la plage de linéarité. On évite ainsi en particulier de commander un déplacement qui serait peu ou pas perçu par le premier capteur.

L'invention a aussi pour objet un système de direction pour un véhicule automobile, le système comportant un actionneur linéaire pour piloter la position de roues directrices, un premier capteur délivrant une première mesure de la position absolue d'une tige de l'actionneur, la première mesure n'étant pas linéaire en dehors d'une plage de linéarité prédéterminée, un deuxième capteur délivrant une deuxième mesure de position relative à la position initiale de la tige à un instant de mise en route, et une unité de commande recevant la première et la deuxième mesure, une consigne de position de l'actionneur et délivrant une commande à l'actionneur, caractérisé en ce que l'unité de commande met en oeuvre un procédé de commande tel que décrit précédemment.

Dans un mode de réalisation particulier, l'unité de commande intègre le premier capteur de position. Du fait que la taille du premier capteur peut être réduite, son intégration est possible dans un boîtier électronique contenant l'unité de commande et placée à proximité de l'actionneur.

### Brève description des figures

L'invention sera mieux comprise et d'autres particularités et avantages apparaîtront à la lecture de la description qui va suivre, la description faisant référence aux dessins annexés parmi lesquels :
- la figure 1 représente de manière schématique un véhicule comportant un système de direction conforme à l'invention ;
- la figure 2 est une vue schématique d'un actionneur du système de la figure 1 ;
- la figure 3 est un diagramme représentant la sortie du capteur de position absolue de la figure 2 ;
- la figure 4 est un logigramme détaillant le procédé de commande mis en oeuvre par le système de l'invention ;
- les figures 5 à 7 sont des diagrammes temporels correspondant à différentes situations de fonctionnement du système de la figure 1.

### DESCRIPTION DETAILLEE

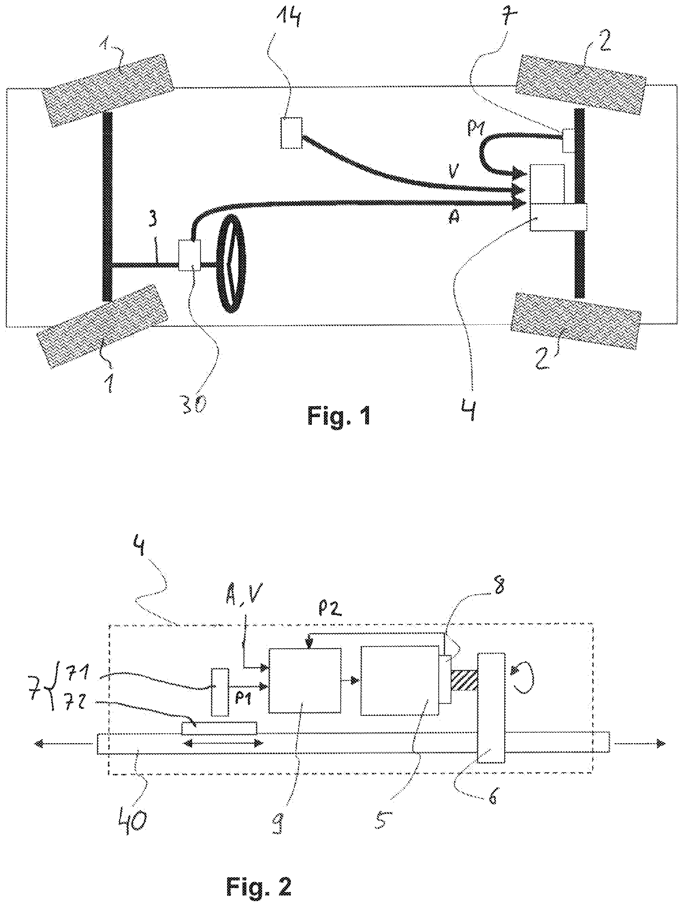

Un véhicule comportant un système de direction conforme à un mode de réalisation de l'invention est montré de manière schématique sur la figure 1. Le véhicule comporte classiquement quatre roues 1, 2, celles-ci étant toutes directrices dans cette configuration. Une paire de roues avant 1 est commandée par le conducteur par l'intermédiaire d'une colonne de direction 3 classique, avec en l'occurrence une transmission mécanique et une assistance électrique. Un capteur de position angulaire 30 délivre un signal de volant donnant une indication de la position du volant.

Le système de direction selon l'invention concerne une paire de roues arrière 2 commandée par un actionneur 4 linéaire et permet d'obtenir un braquage des roues arrière 2 sans liaison mécanique avec la colonne de direction 3. On peut ainsi commander le braquage soit dans le même sens que les roues avant 1 pour une meilleure stabilité du véhicule à grande vitesse, soit dans un sens opposé pour raccourcir le rayon de braquage à faible vitesse.

Le système de direction, comme le montre en particulier la figure 2, comporte un moteur 5 électrique, un réducteur 6 recevant le mouvement du moteur 5 électrique et convertissant ce mouvement en translation transmise à une tige 40 de l'actionneur 4. Le système de direction comporte en outre un système de détermination de la position des roues comprenant un premier capteur 7 délivrant une première mesure P1 de position absolue de la tige 40. Le système de détermination comporte également un deuxième capteur 8 intégré au moteur 5 délivrant une deuxième mesure P2 de position relative à la position initiale de la tige 40 à un instant de mise en route t0. Une unité de commande 9 est prévue dans le système de direction et elle reçoit la première et la deuxième mesure P1, P2 et une consigne C de position de l'actionneur 4, et elle délivre une commande à l'actionneur 4, et plus précisément au moteur 5.

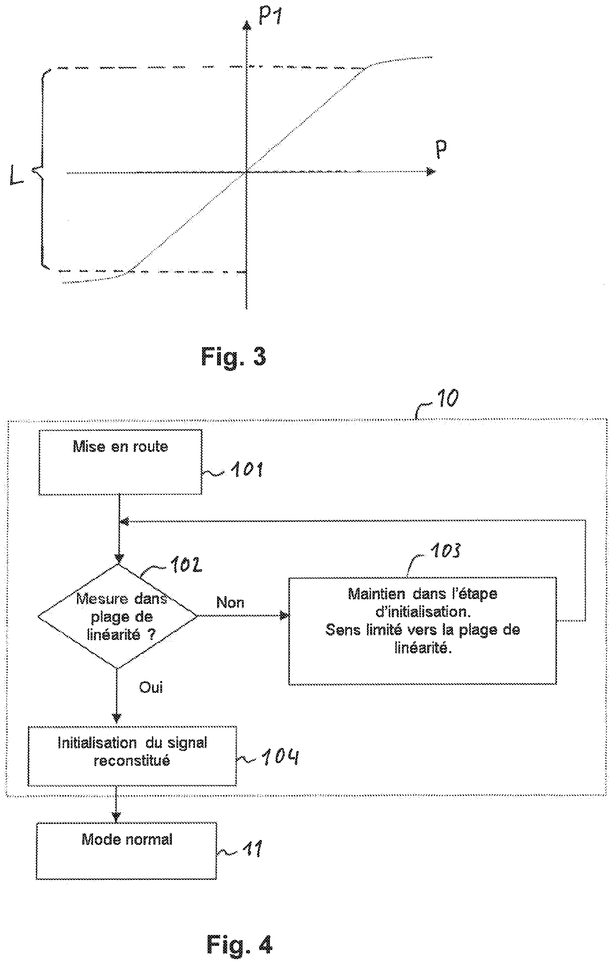

Comme l'illustre la figure 3, la première mesure P1 est linéaire sur une plage de linéarité L, mais n'est plus linéaire en dehors de cette plage de linéarité L, notamment lorsque les roues sont particulièrement braquées sortant de la plage de mesures admissibles par le premier capteur 7. La figure représente en abscisse la position réelle P de la tige 40 et en ordonnée la première mesure P1. On constate qu'en dehors de la plage de linéarité L, la première mesure P1 ne répond que peu au changement de position de la tige 40. Ceci est dû au choix d'un capteur de petite taille qui permet de réduire l'encombrement du premier capteur 7 et de faciliter son intégration. Le premier capteur 7 comporte une partie fixe 71 logée dans l'unité de commande 9 et une partie mobile 72 fixée sur la tige 40 et se déplaçant donc avec elle. La position de la partie mobile 72 en regard de la partie fixe 71 est significative de la première mesure P1. Lorsque les roues sont particulièrement braquées, ladite partie mobile 72 est entièrement décalée par rapport à la partie fixe 71 et donc le premier capteur 7 ne fournit plus la première mesure P1. Il convient alors de ramener la partie mobile 72 en décalage seulement partiel avec la partie fixe 71.

Ainsi, lorsqu'une mesure révèle que la partie mobile 72 ne se trouve pas en regard de la partie fixe, c'est-à-dire lorsque l'angle de braquage des roues arrière est très important et dépasse des limites de mesures, aucune nouvelle commande de braquage des roues arrière n'est alors réalisée. La seule manoeuvre disponible à cet instant est l'exécution d'une commande de redressement des roues arrière.

Les situations où les roues arrière sont très fortement braquées de telle sorte que la partie mobile 72 en dehors du champ de la partie fixe 71 se produisent généralement à une vitesse faible du véhicule, lors par exemple d'une manoeuvre de parking de la voiture. De plus, il faut une phase de réinitialisation du calculateur, par exemple lors d'une coupure intempestive de la ligne de courant d'alimentation. Dans ces cas, il convient de remettre les roues arrière en ligne lors de la phase de réinitialisation du calculateur si une mesure de braquage des roues arrière détecte des valeurs en dehors de la plage de mesures admises. Aucune commande spécifique n'est cependant adressée à l'actionneur 4 mais seules sont prises alors en compte les commandes tendant à ramener les roues arrière en ligne. La plage de mesures admises est appelée plage de linéarité dans le reste du document.

L'unité de commande 9 met en oeuvre un procédé de détermination d'un signal de position reconstitué de la tige 40. Le procédé comporte une étape d'initialisation, comme l'illustre la figure 4 dans laquelle l'étape d'initialisation 10 est subdivisée en sous-étapes. A l'instant de mise en route, dans une première sous-étape 101, on affecte 0 à la deuxième mesure P2 fournie par le deuxième capteur 8. Par la suite, la deuxième mesure P2 correspond aux variations de la position de l'actionneur 4 induite par le mouvement du moteur 5 à partir de cette position initiale. On réalise aussi l'acquisition de la première mesure P1, fournie par le premier capteur 7. La première mesure P1 correspond à une position absolue de la tige 40.

Dans une deuxième sous-étape 102, on compare la première mesure P1 à la plage de linéarité L :
- si la première mesure P1 est en dehors de la plage de linéarité L, on passe à une troisième sous-étape 103 dans laquelle seuls les mouvements de l'actionneur 4 en direction de la plage de linéarité L sont autorisés. On revient à la deuxième sous-étape 102 de comparaison ;
- si la première mesure P1 est dans la plage de linéarité L, on passe à une quatrième sous-étape 104 dans laquelle on reconstitue un signal de position en affectant la valeur fournie par le premier capteur 7 au signal reconstitué et ensuite on y ajoute les variations de la deuxième mesure P2. Ceci revient à fournir le signal de position reconstitué de l'actionneur 4 égal à la deuxième mesure P2 réinitialisée à la valeur de la première mesure P1 après la deuxième sous-étape 102.

Après la quatrième sous-étape 104, la phase d'initialisation 10 est terminée et on passe dans une phase normale 11.

L'unité de commande 9 met également en oeuvre un procédé de commande de la position de l'actionneur 4. Pour cela, l'unité de commande 9 reçoit l'information de position du volant A, une information de vitesse V du véhicule depuis un capteur de vitesse 14 et détermine la consigne C de position pour l'actionneur 4. L'unité de commande 9 pilote le moteur 5 en fonction de la comparaison entre le signal de position reconstitué et la consigne C de position.

### Fonctionnement

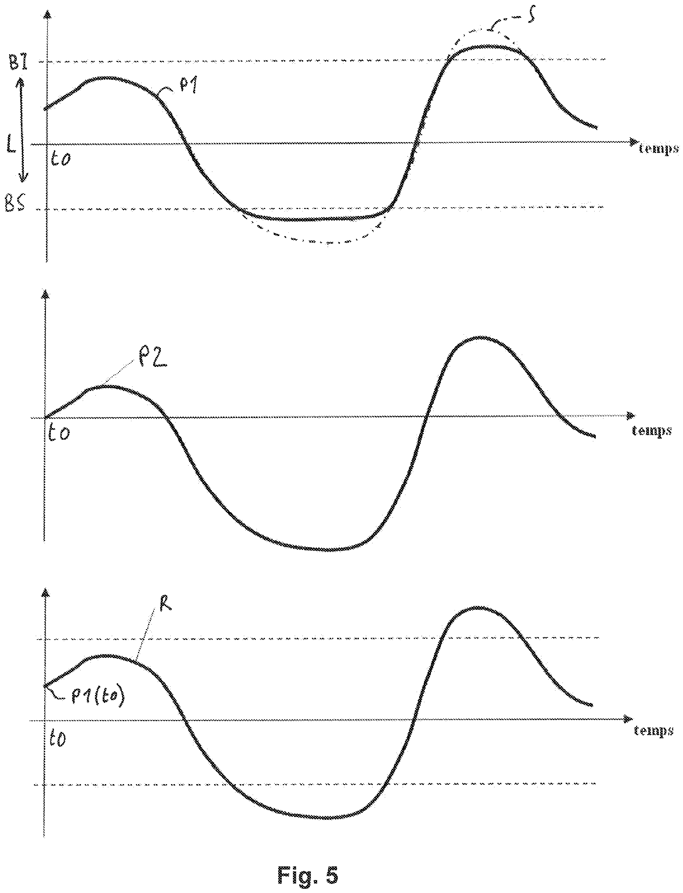

Un premier cas de fonctionnement est illustré par les diagrammes de la figure 5. Dans ce cas, à la mise en route du système de direction à l'instant t0, par exemple à la mise en route du véhicule, la première mesure P1, représentée en trait fort sur le diagramme du haut, est située à l'intérieur de la plage de linéarité L, dont les bornes BI, BS sont représentées par les traits horizontaux en tirets. On remarque que lorsque la première mesure P1 est en dehors de la plage de linéarité L, elle ne correspond pas à une simulation de la mesure S que donnerait un capteur linéaire et représentée par une courbe en traits mixtes. Le diagramme du milieu montre la deuxième mesure P2, qui vaut 0 à l'instant t0 et qui suit le mouvement de l'actionneur 4. Le diagramme du bas représente le signal de position reconstitué R qui suit le même mouvement que la deuxième mesure P2 mais dont la valeur à t0 est la valeur de la première mesure P1 à t0, comme déterminé à la mise en route et lors de l'exécution de l'étape d'initialisation. Le signal de position reconstitué R correspond bien à la position de l'actionneur 4.

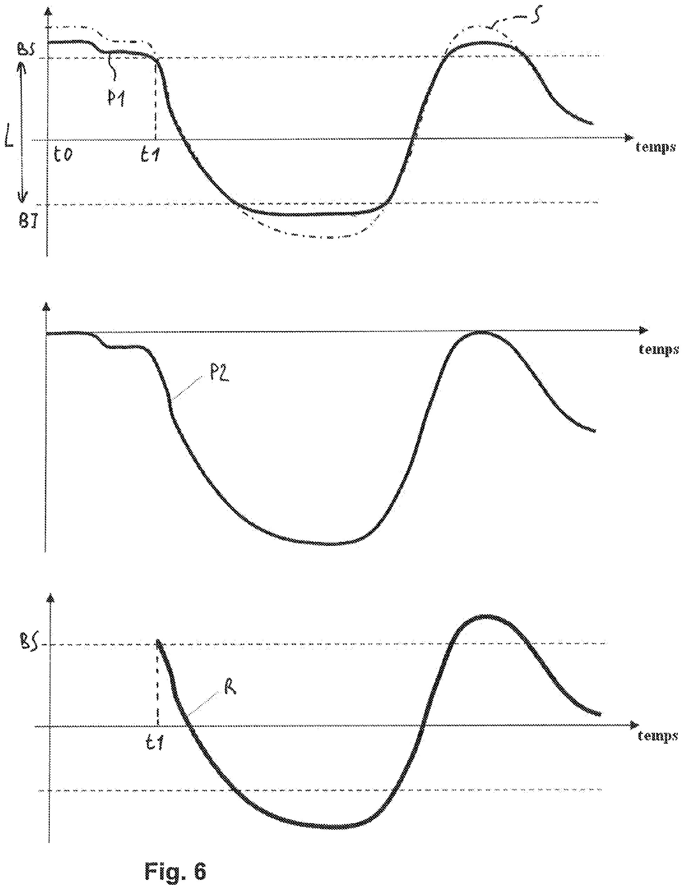

Le deuxième cas, représenté sur la figure 6, correspond à une mise en route lorsque la position la tige 40 est en dehors de la plage de linéarité L du premier capteur 7. De la même manière que précédemment, la première mesure P1 est représentée en trait fort et une simulation de la mesure S que donnerait un capteur linéaire est représentée par une courbe en traits mixtes. A l'instant t0, il existe déjà un décalage entre ces deux valeurs. Aussi, comme expliqué pour les deuxième et troisième sous-étapes 102, 103, on reste dans l'étape d'initialisation 10 tant que la première mesure P1 est en dehors de la plage de linéarité L, jusqu'à l'instant t1 lorsque la première mesure P1 atteint la borne supérieure BS de la plage de linéarité L. A ce moment, on passe en mode normal, en fournissant un signal de position reconstitué R prenant la borne supérieure BS comme point de départ et ajoutant les variations de la deuxième mesure P2 à partir de t1.

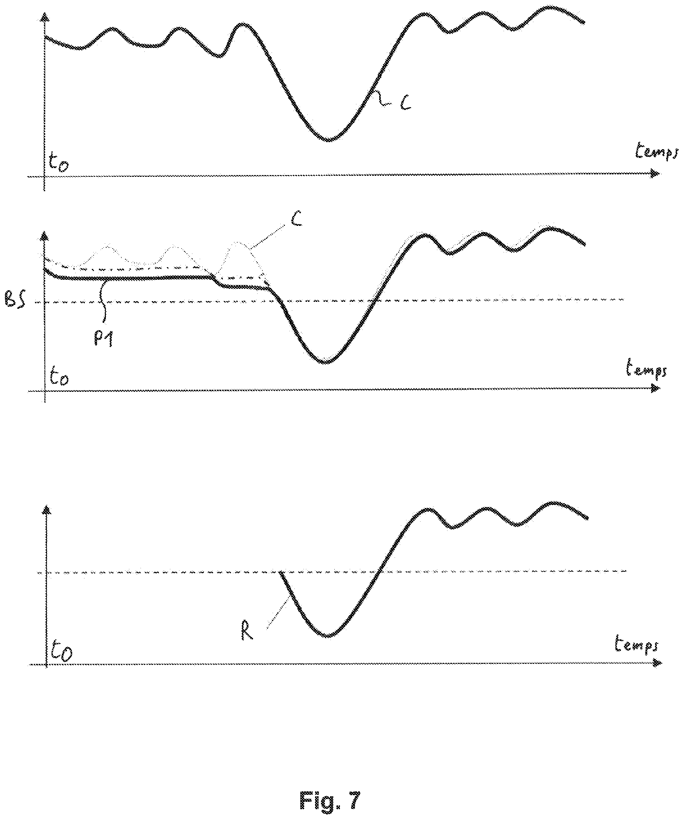

La figure 7 montre le fonctionnement selon le procédé de commande du système de direction. La consigne C de position de l'actionneur 4 est représentée sur le diagramme du haut. Sur le diagramme du milieu, la consigne C est représentée en pointillés. A l'instant t0 comme la première mesure P1 est en dehors de la plage de linéarité L, on reste dans l'étape d'initialisation et on commande l'actionneur 4 uniquement dans les sens qui rapproche la position de la tige 40 de la borne supérieure BS de la plage. Ainsi, même si la consigne C demande de déplacer la tige 40 dans l'autre sens, en s'éloignant de la borne supérieure BS, ce déplacement est neutralisé et la position de l'actionneur 4 ne change pas. Par contre, dès que la consigne C permet le déplacement à l'intérieur de la plage de linéarité L, à l'instant t1, la phase normale 11 permet d'obtenir le signal de position reconstitué R, montré sur le diagramme du bas. Dans cette phase normale 11, le déplacement de la tige 40 n'est plus limité, comme le montre en particulier la partie la plus à droite du diagramme du milieu située en dehors de la plage de linéarité L et montrant des déplacements dans les deux sens.

L'invention n'est pas limitée au mode de réalisation qui vient d'être décrit uniquement à titre d'exemple. Le calcul de la consigne C peut être déporté dans un autre calculateur. Le même système peut être mis en oeuvre pour commander les roues directrices avant, en particulier dans le cas d'une direction dite par fil, sans couplage mécanique entre le volant et l'actionneur des roues.

## Revendications

1. Procédé de détermination d'un signal de position reconstitué (R) de la tige (40) d'un actionneur (4) linéaire d'un système de direction pour un véhicule automobile, le système comprenant un système de détermination de la position de ladite tige qui comporte un premier capteur (7) délivrant une première mesure (P1) de la position absolue de la tige, la première mesure (P1) n'étant pas linéaire en dehors d'une plage de linéarité (L) prédéterminée, et un deuxième capteur (8) délivrant une deuxième mesure (P2) de position relative à la position initiale de la tige (40) à un instant de mise en route du système de détermination, **caractérisé en ce qu'**on effectue une étape d'initialisation à partir de l'instant de mise en route et on maintient l'étape d'initialisation tant que la première mesure (P1) n'est pas dans la plage de linéarité (L), puis on passe à une phase normale après l'étape d'initialisation, phase pendant laquelle on fournit le signal de position reconstitué (R) de la tige (40) égal à la deuxième mesure (P2) réinitialisée à la valeur de la première mesure (P1) à la fin de l'étape d'initialisation.

2. Procédé de commande de la position de la tige (40) d'un actionneur (4) linéaire d'un système de direction pour un véhicule automobile, le système comportant un premier capteur (7) délivrant une première mesure (P1) de la position absolue de la tige, la première mesure (P1) n'étant pas linéaire en dehors d'une plage de linéarité (L) prédéterminée, et un deuxième capteur (8) délivrant une deuxième mesure (P2) de position relative à la position initiale de la tige (40) à un instant de mise en route, procédé selon lequel on reçoit une consigne (C) de position pour la tige (40) et on commande la position de la tige (40) en fonction de la comparaison entre la position de la tige (40) et la consigne (C) de position, **caractérisé en ce que** la position de la tige (40) est déterminée par le signal de position reconstitué (R) selon le procédé de la revendication 1.

3. Procédé de commande selon la revendication 2, dans lequel, pendant l'étape d'initialisation, on utilise la première mesure (P1) comme signal de position reconstitué (R) et on commande l'actionneur (4) uniquement dans le sens vers la plage de linéarité (L).

4. Système de direction pour un véhicule automobile, le système comportant un actionneur (4) linéaire pour piloter la position de roues directrices, un premier capteur (7) délivrant une première mesure (P1) de la position absolue d'une tige (40) de l'actionneur (4), la première mesure (P1) n'étant pas linéaire en dehors d'une plage de linéarité (L) prédéterminée, un deuxième capteur (8) délivrant une deuxième mesure (P2) de position relative à la position initiale de la tige (40) à un instant de mise en route, et une unité de commande (9) recevant la première et la deuxième mesure (P2), une consigne (C) de position de la tige (40) et délivrant une commande à l'actionneur (4), **caractérisé en ce que** l'unité de commande (9) met en oeuvre un procédé de commande selon l'une des revendications 2 ou 3.

5. Système de direction selon la revendication 4, dans lequel l'unité de commande (9) intègre le premier capteur (7) de position.

## Patentansprüche

1. Verfahren zum Bestimmen eines wiederhergestellten Positionssignals (R) des Stifts (40) eines linearen Aktors (4) eines Lenksystems für ein Kraftfahrzeug, wobei das System ein System zum Bestimmen der Position des Stifts umfasst, das einen ersten Sensor (7), der eine erste Messung (P1) der absoluten Position des Stifts liefert, wobei die erste Messung (P1) außerhalb eines vorgegebenen Linearitätsbereichs (L) nichtlinear ist, und einen zweiten Sensor (8), der eine zweite Messung (P2) der relativen Position bezüglich der Anfangsposition des Stifts (40) zu einem Einschaltzeitpunkt des Bestimmungssystems liefert, enthält, **dadurch gekennzeichnet, dass** ab dem Einschaltzeitpunkt ein Initialisierungsschritt ausgeführt wird und dass der Initialisierungsschritt so lange aufrechterhalten wird wie die erste Messung (P1) nicht in dem Linearitätsbereich (L) liegt, dann in eine normale Phase nach dem Initialisierungsschritt übergegangen wird, wobei während dieser Phase das wiederhergestellte Positionssignal (R) des Stifts (40) geliefert wird, das gleich der zweiten Messung (P2) ist, die am Ende des Initialisierungsschritts wieder auf den Wert der ersten Messung (P1) initialisiert wird.

2. Verfahren zum Steuern der Position des Stifts (40) eines linearen Aktors (4) eines Lenksystems für ein Kraftfahrzeug, wobei das System einen ersten Sensor (7), der eine erste Messung (P1) der absoluten Position des Stifts liefert, wobei die erste Messung (P1) außerhalb eines vorgegebenen Linearitätsbereichs (L) nichtlinear ist, und einen zweiten Sensor (8), der eine zweite Messung (P2) der relativen Position bezüglich der Anfangsposition des Stifts (40) zu einem Einschaltzeitpunkt liefert, enthält, wobei in dem Verfahren ein Sollwert (C) der Position für den Stift (40) empfangen wird und die Position des Stifts (40) als Funktion des Vergleichs zwischen der Position des Stifts (40) und dem Positionssollwert (C) gesteuert wird, **dadurch gekennzeichnet, dass** die Position des Stifts (40) durch das wiederhergestellte Positionssignal (R) gemäß dem Verfahren nach Anspruch 1 bestimmt wird.

3. Steuerverfahren nach Anspruch 2, wobei während des Initialisierungsschrittes eine erste Messung (P1) als wiederhergestelltes Positionssignal (R) verwendet wird und der Aktor (4) ausschließlich in Richtung des Linearitätsbereichs (L) gesteuert wird.

4. Lenksystem für ein Kraftfahrzeug, wobei das System einen linearen Aktor (4) zum Steuern der Stellung der gelenkten Räder, einen ersten Sensor (7), der eine erste Messung (P1) der absoluten Position eines Stifts (40) des Aktors (4) liefert, wobei die erste Messung (P1) außerhalb eines vorgegebenen Linearitätsbereichs (L) nichtlinear ist, einen zweiten Sensor (8), der eine zweite Messung (P2) der relativen Position bezüglich der Anfangsposition des Stifts (40) zu einem Einschaltzeitpunkt liefert, und eine Steuereinheit (9), die die erste und die zweite Messung (P2) und einen Positionssollwert (C) der Position des Stifts (40) empfängt und an den Aktor (4) einen Befehl liefert, enthält, **dadurch gekennzeichnet, dass** die Steuereinheit (9) ein Steuerverfahren nach einem der Ansprüche 2 oder 3 ausführt.

5. Lenksystem nach Anspruch 4, wobei der erste Positionssensor (7) in die Steuereinheit (9) integriert ist.

## Claims

1. Method for determining a reconstituted position signal (R) for the rod (40) of a linear actuator (4) of a steering system for a motor vehicle, the system comprising a system for determining the position of said rod, which comprises a first sensor (7) giving a first absolute position measurement (P1) for the rod, the first measurement (P1) not being linear outside a predefined linearity range (L), and a second sensor (8) giving a second position measurement (P2) relative to the initial position of the rod (40) at an instant of start-up of the determination system, **characterized in that** an initialization step is performed from the instant of start-up and the initialization step is maintained as long as the first measurement (P1) does not lie within the linearity range (L), and then switches to a normal phase after the initialization step, during which phase the reconstituted position signal (R) for the rod (40) is supplied which is equal to the second measurement (P2) reinitialized to the value of the first measurement (P1) at the end of the initialization step.

2. Method for controlling the position of the rod (40) of a linear actuator (4) of a steering system for a motor vehicle, the system comprising a first sensor (7) giving a first absolute position measurement (P1) for the rod, the first measurement (P1) not being linear outside a predefined linearity range (L), and a second sensor (8) giving a second position measurement (P2) relative to the initial position of the rod (40) at a start-up instant, in which method a position reference (C) is received for the rod (40), and the position of the rod (40) is controlled as a function of the comparison between the position of the rod (40) and the position reference (C), **characterized in that** the position of the rod (40) is determined by the reconstituted position signal (R) according to the method in Claim 1.

3. Control method according to Claim 2, **characterized in that** during the initialization step, the first measurement (P1) is used as a reconstituted position signal (R) and the actuator (4) is controlled only in the direction towards the linearity range (L).

4. Steering system for a motor vehicle, the system comprising a linear actuator (4) for controlling the position of the steered wheels, a first sensor (7) giving a first absolute position measurement (P1) of a rod (40) of the actuator (4), the first measurement (P1) not being linear outside a predefined linearity range (L), a second sensor (8) giving a second position measurement (P2) relative to the initial position of the rod (40) at a start-up instant, and a control unit (9) receiving the first and second measurements (P2), a position reference (C) for the rod (40), and sending a command to the actuator (4), **characterized in that** the control unit (9) implements a control method according to either of Claims 2 and 3.

5. Steering system according to Claim 4, **characterized in that** the control unit (9) integrates the first position sensor (7).
